# EUROPEAN PATENT APPLICATION

(11) **EP 4 601 108 A1**
(43) Date of publication of application: **13.08.2025**
(21) Application number: 24795609.7
(22) Date of filing: 07.03.2024
(51) Int. Cl.: H01M 50/528, H01M 50/176

(54) **CURRENT COLLECTOR AND BATTERY**

(30) Priority: 29.12.2023 CN 202311873524
(71) Applicant: HUIZHOU EVE POWER CO., LTD, Huizhou, Guangdong 516039 (CN); Eve Power Co., Ltd., Jingmen, Hubei 448000 (CN)
(72) Inventor: SHU, Kuanjin, Huizhou, Guangdong 516039 (CN); DUAN, Dong, Huizhou, Guangdong 516039 (CN); LIU, Ziwen, Huizhou, Guangdong 516039 (CN); HE, Wei, Huizhou, Guangdong 516039 (CN); LIU, Jincheng, Huizhou, Guangdong 516039 (CN)
(74) Representative: Herrero & Asociados, S.L.
(86) International application number: PCT/CN2024/080531
(87) International publication number: WO 2024/222222

(57) **Abstract**

The present disclosure relates to the technical field of batteries, and for example, to a current collector (1) and a battery. The current collector (1) includes a pole post connecting portion (11), a main body portion (12) and a folded portion (13) which are sequentially connected. The pole post connecting portion (11) and the folded portion (13) are respectively located on an inner side and an outer side of the main body portion (12) or on the same side of the main body portion (12). One end of the main body portion (12) is connected to the pole post connecting portion (11), the other end of the main body portion (12) away from the pole post connecting portion (11) is bent to form at least one of the folded portion (13), and the pole post connecting portion (11) is connected to a pole post (41). The folded portion (13) overlaps the main body portion (12), and one of the folded portion (13) or the main body portion (12) is able to be welded to a tab (21) of a cell pack (2).

## Description

The present disclosure claims priority to Chinese Patent Application No. 202311873524.7 filed with the Chinese Patent Office on December 29, 2023, the disclosure of which is incorporated herein by reference in its entirety.

### TECHNICAL FIELD

The present disclosure relates to the technical field of batteries, for example, to a current collector and a battery.

### BACKGROUND

A current collector is one of indispensable components in lithium-ion batteries. It can collect and output current generated by electrode active materials, which is beneficial to reduce internal resistance of the lithium-ion batteries and improve the coulombic efficiency, cycle stability and rate performance of the batteries.

Relevant square battery current collectors are usually L-shaped, including a pole post connecting portion and a main body portion. The pole post connecting portion is welded to a pole post of a battery top cover, and the main body portion is welded to tabs of a cell pack. The characteristic of the L-shaped current collector is that the raw material is uniform and has a single thickness, that is, the thickness of the pole post connecting portion is equal to that of the main body portion. The existing L-type current collectors have a problem that the residual heat generated from welding the main body portion and the tabs easily burns the cell pack, leading to short circuits between the positive electrode sheet and the negative electrode sheet, causing internal short circuits in the battery, and in severe cases, may trigger battery fires and other issues.

### SUMMARY

The present disclosure provides a current collector and a battery, to improve the safety of current collector welding and prevent the residual heat from welding from burning a cell pack of the battery.

In a first aspect, embodiments of the present disclosure provide a current collector, which includes a pole post connecting portion, a main body portion and a folded portion which are sequentially connected, where the pole post connecting portion and the folded portion are respectively located on an inner side and an outer side of the main body portion or the same side of the main body portion;
one end of the main body portion is connected to the pole post connecting portion, the other end of the main body portion away from the pole post connecting portion is bent to form at least one of the folded portion; the pole post connecting portion is able to be connected to a pole post; the folded portion overlaps the main body portion, and one of the folded portion or the main body portion is able to be welded to a tab of a cell pack.

In one embodiment, a connection portion between the pole post connecting portion and the main body portion is formed with a first bent portion; where the first bent portion is provided with a boss.

In one embodiment, one side of the first bent portion is recessed towards the other side of the first bent portion to form the boss.

In an embodiment, an edge of an inner side surface of the post connection portion and/or an edge of an inner side surface of the main body portion and/or an edge of an outer side surface of the folded portion are rounded edges.

In an embodiment, a connection portion between the main body portion and the folded portion is formed with a second bent portion; where two sides of the second bent portion are retracted into the main body portion and the folded portion.

In one embodiment, an outer surface of the second bent portion is a circular arc surface.

In an embodiment, an inner side surface of the folded portion fits against the outer side surface of the main body portion, and a side surface of the folded portion away from the main body portion is able tobe welded to the tab;
or, the folded portion and the main body portion are arranged at intervals along a thickness direction of the main body portion, with one side surface of the folded portions close to the main body portion is able to be welded to the tab.

In one embodiment, the tab is located in a gap between the folded portion and the main body portion; a distance between the main body portion and the adjacent folded portion is b, a thickness of the main body portion is d, a thickness of the tab is N, and 2d ≥ b ≥ N.

In a second aspect, embodiments of the present disclosure provides a battery, including a cell pack, a first insulating member, a cover plate, and two current collectors as described above, where the first insulating member and the cover plate are sequentially stacked on the cell pack, the folded portion or the main body portion of the current collector is welded to a tab of the cell pack; and the pole post connecting portion of the current collector is connected to a pole provided on the cover plate.

In an embodiment, the cell pack is provided with two opposite first side surfaces and two opposite second side surfaces, and the tabs are respectively led out from the two second side surfaces;
each of the second side faces is provided with a second insulating member; the second insulating member includes a covering portion and attaching portions; the two opposite sides of the covering portion are respectively provided with the attaching portion; the covering portion completely covers the corresponding tab and the current collector; and the two attaching portions are respectively attached to the corresponding first side surfaces.

In one embodiment, a top end of the second insulating member overlaps at least a part of the first insulating member; an overlapping height between the second insulating member and the first insulating member is a, a height of the first insulating member is t, a thickness of the main body portion is d, and t > a ≥ 0.5d.

In one embodiment, a distance between the two attaching portions is w, a thickness of the cell pack is D, and w ≥ 5 mm + D;
and/or, a top end of the second insulating member overlaps at least a part of the first insulating member; an overlapping height between the second insulating member and the first insulating member is a, a height of the current collector is h, a height of the cell pack is H, a height of the second insulating member is L, where L ≥ h + 2a, and H + D ≥ L.

In an embodiment, the battery further includes a third insulating member; where two opposite long sides at one end of the cell pack close to the cover plate are both wrapped with the third insulating member.

In an embodiment, the battery further includes a fourth insulating member, and at least one end of the tab close to the cover plate is wrapped with the fourth insulating member.

In an embodiment, one side of the first insulating member away from the cover plate is provided with a receiving groove, which is configured to accommodate the boss of the current collector.

In an embodiment, a protruding portion on one side of the first insulating member away from the cover plate protrudes towards one side of the first insulating member close to the cover plate to form the receiving groove ; the cover plate is provided with a clearance groove to accommodate the protruding portion.

### BRIEF DESCRIPTION OF THE DRAWINGS

FIG. 1 is a schematic diagram of an internal structure of a battery with die-cut tabs provided by embodiments of the present disclosure;
FIG. 2 is an exploded schematic diagram of the internal structure of the battery with die-cut tabs provided by embodiments of the present disclosure;
FIG. 3 is a structural schematic diagram of a positive tab provided by embodiments of the present disclosure;
FIG. 4 is a structural schematic diagram of a negative tab provided by embodiments of the present disclosure;
FIG. 5 is a structural schematic diagram of a first insulating member provided by embodiments of the present disclosure;
FIG. 6 is a schematic diagram of an internal structure of a battery with full tabs provided by embodiments of the present disclosure;
FIG. 7 is an exploded schematic diagram of an internal structure of a battery with full tabs provided by embodiments of the present disclosure;
FIG. 8 is a partial structural schematic diagram of a current collector provided by embodiments of the present disclosure;
FIG. 9 is a partial structural schematic diagram of a battery provided by embodiments of the present disclosure;
FIG. 10 is a structural schematic diagram of a partial cell pack provided by embodiments of the present disclosure;
FIG. 11 is a structural schematic diagram of a second insulating member provided by embodiments of the present disclosure.

The names and reference numerals of the components in the figures are as follows:
1, current collector; 11, pole post connecting portion; 111, welding hole; 112, fuse hole; 113, positioning hole; 12, main body portion; 13, folded portion; 14, first bent portion; 15, protruding boss; 16, second bent portion; 2, cell pack; 21, tab; 3, first insulating member; 31, positioning post; 32, receiving groove; 4, cover plate; 41, pole post; 42, clearance groove; 5, second insulating member; 51, covering portion; 52, attaching portion; 6, third insulating member; 7, fourth insulating member.

### DETAILED DESCRIPTION

In the description of the present disclosure, unless otherwise expressly specified or limited, the terms "connected", "coupled", and "fixed" should be understood broadly, for example, they can be fixed connections, detachable connections, or integral; they can be mechanical connections or electrical connections; they can be direct connections or indirect connections through an intermediary; they can be internal communication between two elements or an interactive relationship between two elements.

In the present disclosure, unless otherwise expressly specified or limited, a phrases of a first feature being "above" or "below" a second feature may include that the first feature is in direct contact with the second feature, or that the first feature and the second feature are not in direct contact with each other, but are in contact through another feature between them. Furthermore, a first feature being "above", "over", or "on" a second feature includes that the first feature is directly above or obliquely above the second feature, or simply means that the first feature is at a higher horizontal level than that of the second feature. A first feature being "below", "under", or "beneath" a second feature includes that the first feature is directly below or obliquely below the second feature, or simply means that the first feature is at a lower horizontal level than that of the second feature.

In the description of these embodiments, orientation or positional relationships indicated by the terms such as "up", "down", "right", and "left" are based on the orientation or positional relationships shown in the accompanying drawings, which are merely for convenience of description and simplification of the operation, rather than indicating or implying that the device or element referred to must have a specific orientation, and be constructed and operated in a specific orientation, and therefore should not be understood as limitations to the present disclosure. In addition, the terms "first" and "second" are only used for description purposes and do not have special meanings.

### First embodiment

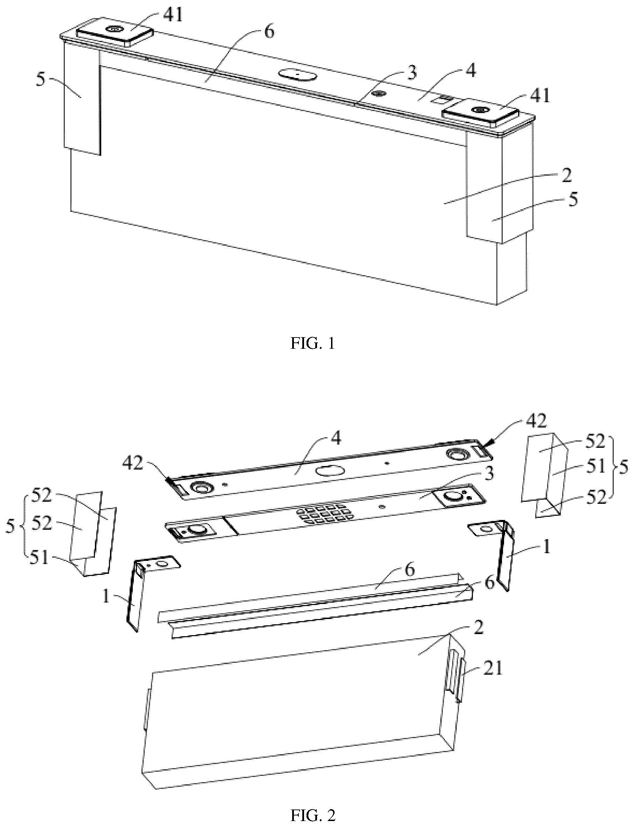

As shown in FIGs. 1 and 2, this embodiment provides a battery. The battery includes a cell pack 2, a first insulating member 3, a cover plate 4, and two current collectors. The first insulating member 3 and the cover plate 4 are sequentially stacked on an upper end of the cell pack 2. The cover plate 4 is provided with two pole posts 41, which are a positive pole post and a negative pole post, respectively. Optionally, the first insulating member 3 is a plastic cover, and the cover plate 4 is a bright aluminum sheet. The cell pack 2 is square-shaped, and is provided with two opposite first side surfaces and two opposite second side surfaces. Tabs 21 are respectively led out from the two second side surfaces, and the tabs 21 are die-cut tabs. The tap 21 on one of the second side surfaces of the cell pack 2 is a positive tab, and the tab 21 on the other one of the second side surfaces is a negative tab. Both ends of each current collector are respectively connected to the tab 21 and the pole post 41, so that the positive tab is electrically connected to the positive pole post via one of the current collectors, and the negative tab is electrically connected to the negative pole post via the other one of the current collectors.

Related current collectors are typically L-shaped, and the problem is that residual heat from welding a main body portion of the current collector to the tab 21 can easily burn the cell pack 2, causing a short circuit between the positive electrode sheets and negative electrode sheets, leading to an internal short circuit within the battery, which in severe cases may result in the battery catching fire.

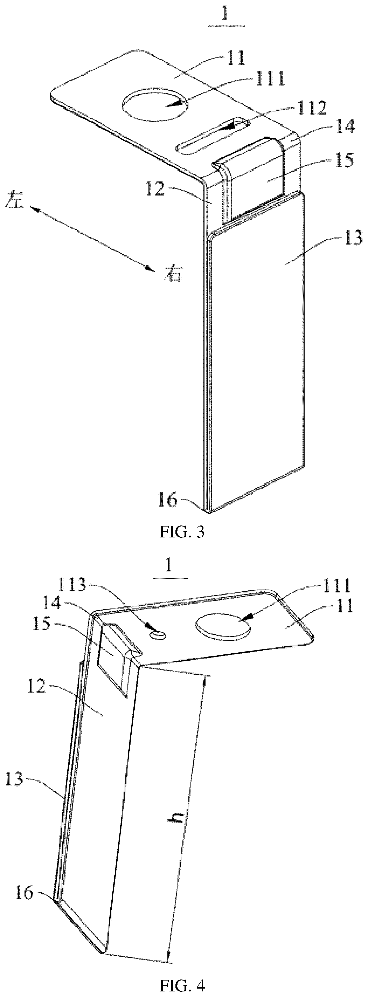

As shown in FIGs. 3 and 4, the present embodiment further provides the current collector 1. The current collector 1 includes a pole post connecting portion 11, a main body portion 12 and a folded portion 13 which are sequentially connected. The pole post connecting portion 11 and the folded portion 13 are respectively located on an inner side and an outer side of the main body portion 12 or on the same side of the main body portion 12. One end of the main body portion 12 is connected to the pole post connecting portion 11, the other end of the main body portion 12 away from the pole post connecting portion 11 is bent to form at least one of the folded portion 13. The pole post connecting portion 11 is provided with a welding hole 111, which can be welded to the pole post 41. The folded portion 13 overlaps the main body portion 12, and either the folded portion 13 or the main body portion 12 can be welded to the tab 21 of the cell pack 2.

Optionally, one of the folded portion 13 and the main body portion 12 which is farther away from the cell pack 2 is welded to the tab 21, so as to reduce an impact of the residual heat of welding on the cell pack 2 as far as possible, thereby better protecting the safety of the cell pack 2. Optionally, the pole post connecting portion 11 and the folded portion 13 are respectively located at the inner side and the outer side in a thickness direction (a direction indicated by an arrow in FIG. 3) of the main body portion 12, with an inner side surface of the folded portion 13 fitting against the outer side surface of the main body portion 12, and a side surface of the folded portion 13 away from the main body portion 12 being welded to the tab 21. In other embodiments, the folded portion 13 and the main body portion 12 are arranged at intervals along the thickness direction (a left-right direction indicated by an arrow in FIG. 3) of the main body portion 12, with one side surface of the folded portion 13 close to the main body portion 12 being welded to the tab 21. In other embodiments, the pole post connecting portion 11 and the folded portion 13 are located on the same side of the main body portion 12 in the thickness direction, with the folded portion 13 being close to the cell pack 2, in this case, the main body portion 12 can be welded to the tab 21.

In this embodiment, the pole post connecting portion 11, the main body portion 12, and the folded portion 13 are provided with the same thickness. By bending the main body portion 12 to form at least one folded portion 13, so that the thickness of the pole post connecting portion 11 of the current collector 1 is less than the sum of the thicknesses of the main body portion 12 and the folded portion 13, and the current collector 1 has inconsistent thickness in the horizontal direction and the vertical direction. Furthermore, the pole post connecting portion 11 of the current collector 1 occupies a relatively small space in a height direction of the battery, thereby improving the space utilization in the height direction of the battery, thereby improving the battery capacity. Furthermore, by welding the folded portion 13 to the tab 21, the residual heat from welding is transferred through the folded portion 13 and the main body portion 12 before reaching the cell pack 2 of the battery, thereby increasing a heat dissipation area and a transmission path of the welding residual heat, preventing the welding residual heat from burning the cell pack 2 to cause a short circuit and fire of the battery, and improving the safety of the battery.

As shown in FIGs. 3 and 4, a connection portion between the pole post connecting portion 11 and the main body portion 12 is formed with a first bent portion 14. The first bent portion 14 is provided with a boss 15. Optionally, the first bent portion 14 has a uniform wall thickness, and one side of the first bent portion 14 is recessed towards the other side of the first bent portion 14 to form the boss 15, thereby saving the materials used for the current collector. For example, the boss 15 can be formed on the first bent portion 14 by stamping. The boss 15 increases the structural strength of the current collector 1, improves the stability of the first bent portion 14, and enables the current collector 1 to have higher deformation resistance. The boss 15 extends to the main body portion 12 and is close to an upper end of the folded portion 13. A part of the boss 15 on the main body portion 12 may serve as a support when the folded portion 13 is welded to the tab 21, providing tooling support for a welding process of the tab 21 to achieve reliable welding.

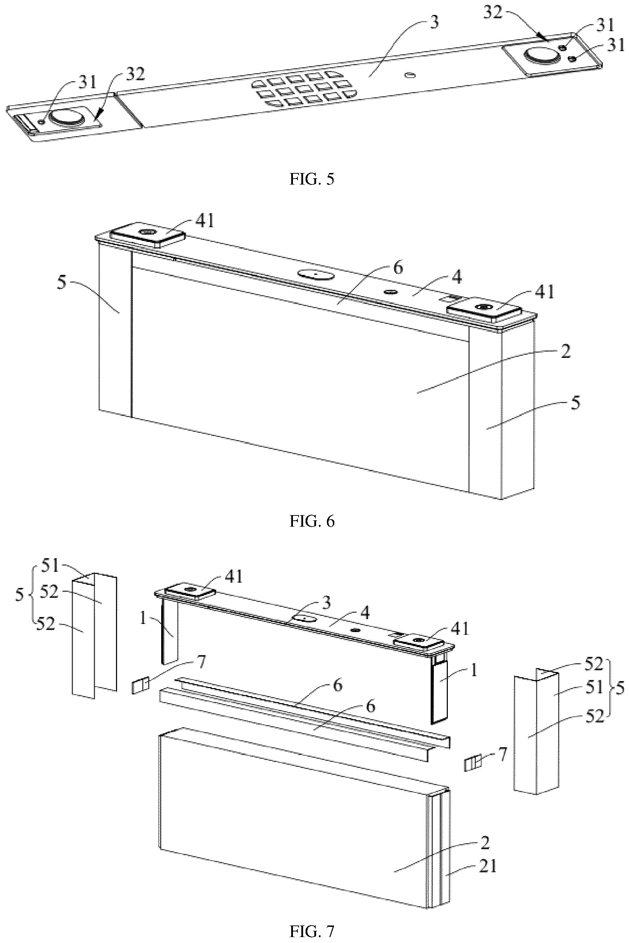

Optionally, as shown in FIGs. 2 and 5, one side of the first insulating member 3 away from the cover plate 4 is provided with a receiving groove 32, which is configured to accommodate the boss 15 of the current collector 1, making the structure of the battery more compact. In this embodiment, a protruding portion on one side of the first insulating member 3 away from the cover plate 4 protrudes towards one side of the first insulating member 3 close to the cover plate 4 to form the receiving groove 32. The cover plate 14 is provided with a clearance groove 42 to accommodate the protruding portion. Optionally, a lower end of the cover plate 4 is formed with the clearance groove 42 to accommodate the protruding portion on an upper end of the first insulating member 3 and the boss 15 of the current collector 1. In a case in which the thickness of the first insulating member 3 is limited, by arranging the clearance groove 42 to accommodate the boss 15 and the protruding portion, the overall height of the battery remains unchanged, thereby preventing the height dimension of the battery from being increased by the boss 15 and the protruding portion, and improving the space utilization in the height direction of the battery and the battery capacity.

In this embodiment, the folded portion 13 is provided, and by welding the folded portion 13 to the tab 21, so that a heat dissipation area and a transmission path of the welding residual heat are increased, and the welding residual heat is prevented from burning the cell pack 2. In other embodiments, in a case that the current collector 1 is relatively thin, the folded portion 13 may also be folded back and forth into two or more times, and any one of the folded portions 13 may be selected to be welded to the tab 21.

Optionally, an edge of an inner side surface of the pole post connecting portion 11 and/or an edge of an inner side surface of the main body portion 12 and/or an edge of an outer side surface of the folded portion 13 are rounded edges, so that the edges of the current collector 1 and the tab 21 in contact or adjacent with the cell pack 2 are respectively rounded edges, thereby preventing the edge of the current collector 1 from cutting the tab 21 or breaking the cell pack 2, and improving the safety of the battery.

Optionally, a connection portion between the main body portion 12 and the folded portion 13 is formed with a second bent portion 16, and an outer surface of the second bent portion 16 is an arc surface. An end portion of the main body portion 12 away from the pole post connecting portion 11 is reversely bent by 180°C to form the folded portion 13, so that the second bent portion 16 between the main body portion 12 and the folded portion 13 is an arc surface, which avoids scratching the second side surface of the cell pack 2, and at the same time avoids scratching the second insulating member 5 (as shown in FIG. 2) outside the tab 21, thereby improving the safety of the battery.

Two sides of the second bent portion 16 retract into the main body portion 12 and the folded portion 13, that is, a width of the second bent portion 16 is less than a width of the folded portion 13, so as to prevent the second bent portion 16 from forming a sharp portion at both sides in the width direction of the current collector 1, thereby preventing the second side surface of the cell pack 2 from being damaged, and at the same time, avoiding the second insulating member 5 outside the tab 21 from being scraped, thereby improving the safety of the battery.

In this embodiment, the two current collectors 1 are respectively a positive current collector and a negative current collector. The structure of the positive current collector is as shown in FIG. 3. The pole post connecting portion 11 of the positive current collector is formed with a fuse hole 112, so that in a case that a short circuit occurs in the battery, the current collector 1 can be fused at the fuse hole 112, thereby avoiding safety risks such as overheating and fire in the battery, and improving the protection of the battery. The structure of the negative current collector is shown in FIG. 4, and the pole post connecting portion 11 of the negative current collector is formed with a positioning hole 113. As shown in FIG. 5, a first side of a lower end of the first insulating member 3 corresponding to the positive current collector is provided with two positioning posts 31, and a second side of the lower end of the first insulating member 3 corresponding to the negative current collector is provided with one positioning post 31. The two positioning posts 31 on the first side are inserted into the corresponding fuse holes 112, and the one positioning post 31 on the second side is inserted into the corresponding positioning hole 113, so as to achieve the positioning and installation of the first insulating member 3 and the tab 21.

As shown in FIGs. 1, 2 and 11, each of the second side surfaces of the cell pack 2 is provided with a second insulating member 5, which includes a covering portion 51 and attaching portions 52. Two opposite sides of the covering portion 51 are respectively provided with the attaching portion 52, making the second insulating member 5 a U-shaped structure. The covering portion 51 completely covers the corresponding tab 21 and the current collector 1, and the two attaching portions 52 are respectively attached to the corresponding first side surfaces. After the tabs 21 on the second side surface of the cell pack 2 is welded to the current collector 1, the second insulating member 5 is used for insulation, thereby improving the insulation performance of the cell pack 2, avoiding short circuits between the current collector 1 or the tabs 21 and the housing of the battery during battery assembly, and improving the safety during battery assembly.

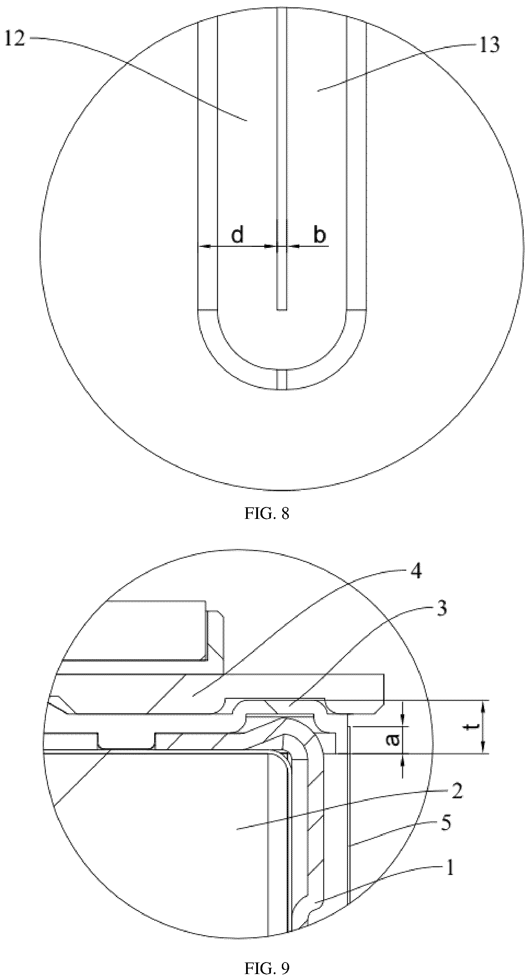

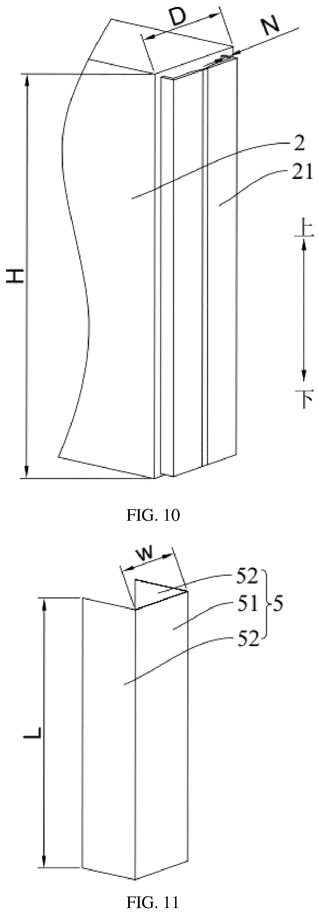

Optionally, as shown in FIGs. 8 and 9, a top end of the second insulating member 5 overlaps at least a part of the first insulating member 3. An overlapping height between the second insulating member 5 and the first insulating member 3 is a, a height of the first insulating member 3 is t, a thickness of the main body portion 12 is d, and t > a ≥ 0.5d, so that the overlapping height is not zero and does not interfere with the second insulating member 5. By means of the overlapping arrangement of the second insulating member 5 and the first insulating member 3, it is ensured that the second insulating member 5 can completely wrap around the outside of the current collector 1 and the tab 21, thereby improving the insulation performance of the current collector 1 and the tab 21. Optionally, as shown in FIGs. 10 and 11, a distance between the two attaching portions 52 is w, a thickness of the cell pack 2 is D, and w ≥ 5 mm + D, so as to ensure that the current collector and the tab are completely wrapped by the second insulating member 5 in a thickness direction of the cell pack 2, thereby improving an insulation effect. As shown in FIGs. 4, 10 and 11, a height of the current collector 1 is h, a height of the cell pack 2 is H, a height of the second insulating member 5 is L, and L ≥ h+2a, so that the second insulating member 5 can completely cover the current collector in the height direction (the up-down direction in FIG. 10), thereby improving the insulation performance. And H+D ≥ L, so that when the tab 21 is a full tab, a bottom of the cell pack 2 is completely covered by the second insulating member 5 in the height direction, thereby improving the insulation performance.

Optionally, the battery further includes a third insulating member 6, and two opposite long sides at a top end of the cell pack 2 are both wrapped with the third insulating member 6. The third insulating member 6 is an insulating strip, which wraps from the first side surface of the cell pack 2 towards the top end of the cell pack 2, so that the two long sides at the top end of the cell pack 2 are completely wrapped, thereby avoiding damage to the top end surface of the cell pack 2 when the first insulating member 3 is installed, and improving the protection for the top end of the cell pack 2. A length of the third insulating member 6 may be flexibly selected according to installation needs, as long as the third insulating member 6 does not interfere with the two second insulating members 5, which is not limited herein.

As shown in FIGs. 6 and 7, in a case in which the tabs 21 of the cell pack 2 of the battery are full tabs, the battery further includes a fourth insulating member 7, which is an insulating strip. At least one end of the tab 21 close to the cover plate 4 is wrapped with the fourth insulating member 7, so as to ensure insulation of the tab 21 at the top end of the cell pack 2. At the same time, the height of the second insulating member 5 is adjusted according to the size of the tab 21, so as to ensure that the second insulating member 5 wraps an outer surface of the tab 21 completely.

### Second embodiment

This embodiment provides a current collector 1, which differs mainly from the current collector 1 in the first embodiment in that the folded portion 13 and the main body portion 12 are arranged at intervals along a thickness direction of the main body portion 12 (the left-right direction indicated by an arrow in FIG. 3), and a side surface of the folded portion 13 close to the main body portion 12 can be welded to the tab 21. The current collector 1 of the present embodiment improves the space utilization in the height direction of the battery, thereby increasing the battery capacity. Furthermore, by welding the folded portion 13 to the tab 21,the welding residual heat can only be transferred to the cell pack 2 of the battery after passing through the folded portion 13 and the main body portion 12, thereby increasing the heat dissipation area and the transmission path of the welding residual heat, preventing the welding residual heat from burning the cell pack 2 to cause short circuits and fire in the battery, and improving the safety of the battery.

Optionally, as shown in FIGs. 8 and 10, the tab 21 is located in a gap between the folded portion 13 and the main body portion 12. A distance between the main body portion 12 and an adjacent folded portion 13 is b, the thickness of the main body portion 12 is d, a thickness of the tab 21 is N, and 2d ≥ b ≥ N, to enable the tab 21 to be welded between the main body portion 12 and the adjacent folded portion 13, while avoiding an excessively large distance b between the main body portion 12 and the adjacent folded portion 13, which helps to reduce the occupied volume, to improve the energy density. In this embodiment, the tab 21 is formed by stacking n tab 21 units, and a thickness of each tab 21 unit is 0.002 mm, that is, N=n*0.002 mm.

## Claims

1. A current collector, comprising a pole post connecting portion (11), a main body portion (12) and a folded portion (13) which are sequentially connected, wherein the pole post connecting portion (11) and the folded portion (13) are respectively located on an inner side and an outer side of the main body portion (12) or on the same side of the main body portion (12);
one end of the main body portion (12) is connected to the pole post connecting portion (11), the other end of the main body portion (12) away from the pole post connecting portion (11) is bent to form at least one of the folded portion (13); the pole post connecting portion (11) is able to be connected to a pole post (41); the folded portion (13) overlaps the main body portion (12), and one of the folded portion (13) or the main body portion (12) is able to be welded to a tab (21) of a cell pack (2).

2. The current collector according to claim 1, wherein a connection portion between the pole post connecting portion (11) and the main body portion (12) is formed with a first bent portion (14); wherein the first bent portion (14) is provided with a boss (15).

3. The current collector according to claim 2, wherein one side of the first bent portion (14) is recessed towards the other side of the first bent portion (14) to form the boss (15).

4. The current collector according to claim 1, wherein at least one of an edge of an inner side surface of the pole post connecting portion (11), an edge of an inner side surface of the main body portion (12), and an edge of an outer side surface of the folded portion (13) is a rounded edge.

5. The current collector according to claim 1, wherein a connection portion between the main body portion (12) and the folded portion (13) is formed with a second bent portion (16); wherein two sides of the second bent portion (16) retract into the main body portion (12) and the folded portion (13).

6. The current collector according to claim 5, wherein an outer surface of the second bent portion (16) is a circular arc surface.

7. The current collector according to any one of claims 1 to 6, wherein an inner side surface of the folded portion (13) fits against the outer side surface of the main body portion (12), and a side surface of the folded portion (13) away from the main body portion (12) is able to be welded to the tab (21);
or, the folded portion (13) and the main body portion (12) are arranged at intervals along a thickness direction of the main body portion (12), with one side surface of the folded portion (13) close to the main body portion (12) is able to be welded to the tab (21).

8. The current collector according to claim 7, wherein the tab (21) is located in a gap between the folded portion (13) and the main body portion (12); wherein a distance between the main body portion (12) and the adjacent folded portion (13) is b, a thickness of the main body portion (12) is d, a thickness of the tab (21) is N, and 2d ≥ b ≥ N.

9. A battery, comprising a cell pack (2), a first insulating member (3), a cover plate (4), and two current collectors according to any one of claims 1 to 8, wherein the first insulating member (3) and the cover plate (4) are sequentially stacked on the cell pack (2); the folded portion (13) or the main body portion (12) of the current collectors is welded to a tab (21) of the cell pack (2); and the pole post connecting portion (11) of the current collector is connected to a pole post (41) provided on the cover plate (4).

10. The battery according to claim 9, wherein the cell pack (2) is provided with two opposite first side surfaces and two opposite second side surfaces, and the tabs (21) are respectively led out from the two second side surfaces;
each of the second side surfaces is provided with a second insulating member (5), which comprises a covering portion (51) and attaching portions (52); the two opposite sides of the covering portion (51) are respectively provided with the attaching portion (52); the covering portion (51) completely covers the corresponding tab (21) and the current collector, and the two attaching portions (52) are respectively attached to the corresponding first side surfaces.

11. The battery according to claim 10, wherein a top end of the second insulating member (5) overlaps at least a part of the first insulating member (3); an overlapping height between the second insulating member (5) and the first insulating member (3) is a, a height of the first insulating member (3) is t, a thickness of the main body portion (12) is d, and t > a ≥ 0.5d.

12. The battery according to claim 10, wherein at least one of the following conditions is satisfied:
a distance between the two attaching portions (52) is w, a thickness of the cell pack (2) is D, and w ≥ 5 mm + D;
a top end of the second insulating member (5) overlaps at least a part of the first insulating member (3); an overlapping height between the second insulating member (5) and the first insulating member (3) is a, a height of the current collector is h, a height of the cell pack (2) is H, a height of the second insulating member (5) is L, wherein L ≥ h+2a, and H+D ≥ L.

13. The battery according to any one of claims 9 to 12, wherein the battery further comprises a third insulating member (6); wherein two opposite long sides at one end of the cell pack (2) close to the cover plate (4) are both wrapped with the third insulating member (6).

14. The battery according to any one of claims 9 to 12, wherein the battery further comprises a fourth insulating member (7); wherein at least one end of the tab (21) close to the cover plate (4) is wrapped with the fourth insulating member (7).

15. The battery according to any one of claims 9-12, wherein one side of the first insulating member (3) away from the cover plate (4) is provided with a receiving groove (32), which is configured to accommodate a boss (15) of the current collector.

16. The battery according to claim 15, wherein a protruding portion on one side of the first insulating member (3) away from the cover plate (4) protrudes towards one side of the first insulating member (3) close to the cover plate (4) to form the receiving groove (32); the cover plate (4) is provided with a clearance groove (42) to accommodate the protruding portion.
